# EUROPÄISCHE PATENTSCHRIFT

(11) **EP 2 557 752 B1**
(45) Veröffentlichungstag und Bekanntmachung des Hinweises auf die Patenterteilung: **27.09.2017**
(21) Anmeldenummer: 11177218.2
(22) Anmeldetag: 11.08.2011
(51) Int. Cl.: H04L 29/06, H04L 29/08

(54) **VERFAHREN UND VORRICHTUNG ZUM HERSTELLEN EINER END-ZU-END-KOMMUNIKATION ZWISCHEN ZWEI NETZWERKEN**
Method and device for producing an end-to-end communication between two networks
Procédé et dispositif de fabrication d'une communication bout-à-bout entre deux réseaux

(43) Veröffentlichungstag der Anmeldung: 13.02.2013
(73) Patentinhaber: Siemens Aktiengesellschaft, 80333 München (DE)
(72) Erfinder: Heinrich, Andreas, Dr., 81377 München (DE); Heuer, Jörg, Dr., 82041 Oberhaching (DE); Käbisch, Sebastian, 80997 München (DE)

(56) Entgegenhaltungen:
- US-A1- 2005 060 431
- US-A1- 2010 050 089
- US-B1- 7 069 342

## Beschreibung

Die vorliegende Erfindung bezieht sich auf ein Verfahren und eine Vorrichtung zum Herstellen einer End-zu-End-Kommunikation zwischen zwei Netzwerken.

Drahtlose oder drahtgebundene Sensornetzwerke werden heutzutage an das Internet angebunden, um eine Steuerung der Sensoren des Sensornetzwerks über das Internet von überall auf der Welt zu ermöglichen. Um ein Sensornetzwerk an das Internet anzubinden, werden entsprechende Schnittstellen benötigt, um Steuerbefehle, Datenpakete und/oder Nachrichten vom Internet an das Sensornetzwerk zu übertragen und umgekehrt um Antwortnachrichten, Fehlermeldungen und/oder Ausgabedaten von dem Sensornetzwerk ins Internet zurückzuleiten.

Die Druckschrift US 2005/0050431 A1 offenbart ein Verfahren zum Erzeugen von Web Services Nachrichten mit reduzierter Größe, mit dem invariante Daten einer SOAP-Nachricht in einem komprimierten Format übermittelt werden.

Die Druckschrift US 7,069,342 B1 offenbart ein Verfahren zum dynamischen Anpassen der Komprimierung von Netzwerkdaten, welches die Art der Netzwerkdaten bei der Wahl des Komprimierungsschemas berücksichtigt.

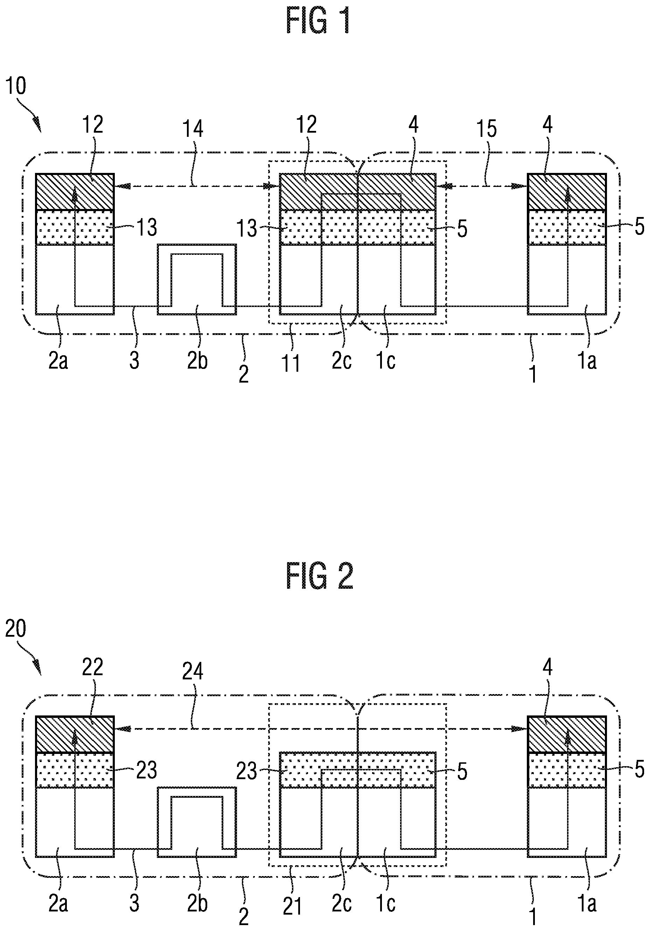

Fig. 1 zeigt ein Schaubild für ein Modell 10 einer Kommunikation zwischen zwei Netzwerken. Dabei besteht ein erstes Netzwerk 1, beispielsweise das Internet, aus einer Vielzahl von Knoten, die über eine erste Protokollfamilie kommunizieren. Im Falle des Internets ist dies die Internetprotokollfamilie, welche beispielsweise TCP/IP (TCP - Transport Control Protocol, IP - Internet Protocol) zur Kommunikation verwendet. TCP/IP weist auf einer unteren Kommunikationsschicht 1a Internetprotokolle wie IPv4 oder IPv6 auf, die für eine Weiterleitung von Datenpaketen (Routing) verantwortlich ist. Auf einer oberen anwendungsspezifischen Kommunikationsschicht 5 kommen Transportprotokolle wie beispielsweise http (http - Hypertext Transfer Protocol) [3,4] zum Einsatz, die durch Anwendungen 4, die beispielsweise Dienste in serviceorientierter Architektur (SOA) anbieten, zum Austausch von Daten und/oder Nachrichten genutzt werden.

Ein zweites Netzwerk 2, beispielsweise ein drahtloses Sensornetzwerk, kann mit dem ersten Netzwerk 1 kommunizieren. Dazu benötigt es einen Nachrichtenpfad 3, über den Nachrichten und/oder Daten zwischen den Anwendungen 4 des ersten Netzwerks 1 und proprietären Anwendungen 12 des zweiten Netzwerks 2 ausgetauscht werden können. Im zweiten Netzwerk befinden sich dabei Knoten 2a, 2b und 2c, die auf einer unteren Kommunikationsebene zumeist über ein proprietäres Routingprotokoll verfügen. Zudem kommen häufig auf einer oberen Kommunikationsschicht 13 proprietäre Transportprotokolle zum Einsatz, so dass eine direkte Kommunikation zwischen den Anwendungen 4 des ersten Netzwerks 1 und den Anwendungen 12 des zweiten Netzwerks 2 nicht möglich ist.

Um eine End-zu-End-Kommunikation zwischen den Netzwerken 1 und 2 herzustellen, wird häufig ein Anwendungsgateway 11 bereitgestellt. Von einem Ausgangsknoten im ersten Netzwerk 1 verläuft die Kommunikation 15 über ein erstes Transportprotokoll, beispielsweise HTTP, hin zu dem Anwendungsgateway 11, in dem die Nachrichten bzw. Daten auf Anwendungsebene von der Anwendung 4 des ersten Netzwerks 1 in die Anwendung 12 des zweiten Netzwerks 2 umgesetzt werden. Danach verläuft die Kommunikation zwischen dem Anwendungsgateway 11 und einem Knoten 2a des zweiten Netzwerks 2 über das proprietäre Transportprotokoll des zweiten Netzwerks 2. In umgekehrter Richtung verläuft der Daten- bzw. Nachrichtenstrom entsprechend.

Da die beiden Netzwerke 1 und 2 unterschiedliche Transportprotokolle unterschiedlicher Protokollfamilien nutzen, muss das Anwendungsgateway 11 alle gewünschten Merkmale und Funktionalitäten auf Anwendungsebene von einem Netzwerk in das andere Netzwerk umsetzen. Dies führt zu einer verminderten Flexibilität solcher Anwendungsgateways 11. Beispielsweise erfordern Änderungen in den Protokollen auf der einen oder anderen Netzwerkseite stets Änderungen der entsprechenden Umsetzungsfunktionen in dem Anwendungsgateway 11. Ferner ist eine Unterstützung vieler verschiedener Anwendungen und Protokolle schwer zu realisieren, da für jede Funktionalität genaue Detailkenntnisse der entsprechenden Protokolle erforderlich sind. Besonders nicht standardisierte oder anbieterspezifische Protokolle sind daher schwierig zu unterstützen.

Es ist daher wünschenswert, eine direkte Kommunikation zwischen Anwendungen verschiedener Netzwerke zu schaffen. Fig. 2 zeigt ein Schaubild für ein weiteres Modell 20 einer Kommunikation zwischen zwei Netzwerken. Das Modell 20 unterscheidet sich vom Modell 10 im Wesentlichen darin, dass zwischen den Anwendungen 4 des ersten Netzwerks 1 und Anwendungen 22 des zweiten Netzwerks 2 eine direkte oder transparente Kommunikation 24 möglich ist. Die grundlegende Idee eines solchen Modells 20 besteht darin, die Transportprotokolle der Kommunikationsschicht 5 des ersten Netzwerks 1 an die Transportprotokolle 23 des zweiten Netzwerks 2 anzupassen. Dazu ist es nötig, die Semantik des verwendeten Protokolls, beispielsweise HTTP beizubehalten. HTTP ist jedoch ein textbasiertes Transportprotokoll, welches aufgrund der Paketgröße der versendeten Nachrichten bzw. Daten für viele Sensornetzwerke unbrauchbar ist. Daher werden häufig Router 21 verwendet, die auf einer oberen Kommunikationsebene das im ersten Netzwerk 1 verwendete Transportprotokoll, beispielsweise HTTP, in ein komprimiertes Transportprotokoll, beispielsweise komprimiertes HTTP, umsetzen. Dadurch können Anwendungen 4 und 22 transparent über HTTP kommunizieren, so dass neue Anwendungen mit neuer Funktionalität in die Netzwerke 1 oder 2 eingebunden werden können, ohne dass der Router 21 angepasst werden muss.

Heute werden allerdings mehr und mehr Webservices eingesetzt, deren Anbindung an Sensornetzwerke sehr wünschenswert ist. Webservices verwenden zur Kommunikation häufig vereinheitlichte Netzwerkprotokolle, wie beispielsweise SOAP. SOAP ist ein Protokoll zum Austausch von Nachrichten über ein Computernetzwerk und stellt Regeln für das Nachrichtendesign auf. Insbesondere regelt es, wie Daten in der Nachricht abzubilden und zu interpretieren sind. SOAP basiert auf zumeist auf einem einheitlichen Datenprotokoll wie XML (Extensible Markup Language) in Kombination mit Transportprotokollen wie HTTP und Internetprotokollen wie IPv4 oder IPv6. Die Verbosität und Datenfülle solcher Netzwerkprotokolle ist zwar für rechenstarke Systeme wie PCs, Laptops oder Mobiltelefone problemlos zu handhaben, für eingebettete Geräte ("embedded devices") wie beispielsweise Mikroprozessoren, die häufig in Sensornetzwerken eingesetzt werden, ist diese Datenmenge jedoch nur unter erheblichen Laufzeitverlusten und mit großem Speicherbedarf zu bewältigen. Eine effiziente End-zu-End-Kommunikation ist mit einem Modell wie beispielsweise in Fig. 2 gezeigt nicht zu bewerkstelligen.

Die vorliegende Erfindung schafft eine Lösung für die vorstehend genannten Probleme, indem ein Verfahren zum Herstellen einer End-zu-End-Kommunikation zwischen zwei Netzwerken gemäß Patentanspruch 1 und 2, eine Vorrichtung zum Herstellen einer End-zu-End-Kommunikation zwischen zwei Netzwerken gemäß Patentanspruch 11 und 12 sowie ein System mit einer Vorrichtung zum Herstellen einer End-zu-End-Kommunikation zwischen zwei Netzwerken gemäß Patentanspruch 13 angegeben wird.

Gemäß einer Ausführungsform der Erfindung umfasst ein Verfahren zum Herstellen einer End-zu-End-Kommunikation zwischen zwei Netzwerken die Schritte des Empfangens einer Nachricht aus einem ersten Netzwerk, wobei die Nachricht einen ersten Header und einen Anwendungsdatenteil aufweist, des Codierens von Daten des ersten Headers in einen zweiten Header innerhalb des Anwendungsdatenteils mit Hilfe eines ersten Codierungsschemas zur Erzeugung eines modifizierten Anwendungsdatenteils, des Codierens des modifizierten Anwendungsdatenteils mit Hilfe eines zweiten Codierungsschemas zur Erzeugung einer codierten Nachricht, und des Sendens der codierten Nachricht an ein zweites Netzwerk. Dieses Verfahren bietet den Vorteil, Nachrichten, die Bestandteile mehrerer Kommunikationsprotokolle aufweisen, mit Hilfe einer einheitlichen Codierung zu versehen, um den Implementierungsaufwand für Decodierer auf Seiten des Zielnetzwerks der Nachricht gering zu halten. Dadurch wird mehr vorteilhafterweise mehr Speicher für Anwendungslogik freigehalten. Das erfindungsgemäße Verfahren bietet weiterhin den Vorteil, flexibel auf Kompatibilitätsvorgaben seitens der Anwendungen reagieren zu können. Insbesondere ist es bei einer Änderung der Funktionen der Anwendungsdaten nicht notwendig, das erfindungsgemäße Codierungsverfahren anzupassen.

Vorteilhafterweise kann das Verfahren zur Codierung von XML-Nachrichten [5] dienen, insbesondere SOAP-Nachrichten [7]. Dabei kann der erste Header HTTP-Daten [3,4] umfassen, die in einen SOAP-Header der SOAP-Nachricht mit Hilfe von Web Service Addressing umgesetzt werden.

Vorteilhafterweise kann das Verfahren der modifizierte Anwendungsdatenteil mit Hilfe eines binären Codierungsschema, insbesondere Efficient XML Interchange (EXI) [2] codieren. Dies ermöglicht eine hohe Kompressionsrate, da Efficient XML Interchange (EXI) nicht an Bytegrößen gebunden ist.

Vorteilhafterweise dient das erfindungsgemäße Verfahren zur Herstellung einer End-zu-End-Kommunikation zwischen Netzwerkknoten im Internet auf der einen und Netzwerkknoten in einem drahtlosen oder drahtgebundenen Sensornetzwerk auf der anderen Seite. Dies bietet den Vorteil, dass sich eingebettete Geräte, insbesondere Sensoren besser und einfacher in Web Services integrieren lassen.

Gemäß einer weiteren Ausführungsform umfasst ein Verfahren zum Herstellen einer End-zu-End-Kommunikation zwischen zwei Netzwerken das Empfangen einer codierten Nachricht aus einem zweiten Netzwerk, das Decodieren der codierten Nachricht in einen Anwendungsdatenteil mit einem zweiten Header und Anwendungsdaten mit Hilfe eines zweiten Codierungsschemas, das Decodieren von Daten des zweiten Headers in einen ersten Header mit Hilfe eines ersten Codierungsschemas, das Anfügen des ersten Headers vor den Anwendungsdatenteil zur Erzeugung einer decodierten Nachricht, und das Senden der decodierten Nachricht an ein erstes Netzwerk. Dieses Verfahren bietet den Vorteil, anknüpfend an das Verfahren der ersten Ausführungsform Antwortnachrichten auf gemäß dem Verfahren nach der ersten Ausführungsform codierte Nachrichten entsprechend zu decodieren und an das Ausgangsnetzwerk weiterzuleiten.

Gemäß einer weiteren Ausführungsform der Erfindung umfasst eine Vorrichtung zum Herstellen einer End-zu-End-Kommunikation zwischen zwei Netzwerken eine erste Sende-/Empfangseinrichtung, die dazu ausgelegt ist, eine Nachricht aus einem ersten Netzwerk zu empfangen, wobei die Nachricht einen ersten Header und einen Anwendungsdatenteil aufweist, eine erste Codiereinrichtung, die dazu ausgelegt ist, Daten des ersten Headers in einen zweiten Header innerhalb des Anwendungsdatenteils mit Hilfe eines ersten Codierungsschemas in einen modifizierten Anwendungsdatenteil zu codieren, eine zweite Codiereinrichtung, die dazu ausgelegt ist, den modifizierten Anwendungsdatenteil mit Hilfe eines zweiten Codierungsschemas in eine codierte Nachricht zu codieren, und eine zweite Sende-/Empfangseinrichtung, die dazu ausgelegt ist, die codierte Nachricht an ein zweites Netzwerk zu senden.

Gemäß einer weiteren Ausführungsform umfasst eine Vorrichtung zum Herstellen einer End-zu-End-Kommunikation zwischen zwei Netzwerken eine zweite Sende-/Empfangseinrichtung, die dazu ausgelegt ist, eine codierte Nachricht aus einem zweiten Netzwerk zu empfangen, eine zweite Decodiereinrichtung, die dazu ausgelegt ist, Daten der codierten Nachricht in einen Anwendungsdatenteil mit einem zweiten Header und Anwendungsdaten mit Hilfe eines zweiten Codierungsschemas zu decodieren, eine erste Decodiereinrichtung, die dazu ausgelegt ist, Daten des zweiten Headers in einen ersten Header mit Hilfe eines ersten Codierungsschemas zu decodieren, und den ersten Header vor den Anwendungsdatenteil zur Erzeugung einer decodierten Nachricht anzufügen, und eine erste Sende-/Empfangseinrichtung, die dazu ausgelegt ist, die decodierte Nachricht an ein erstes Netzwerk zu senden.

Gemäß einer weiteren Ausführungsform umfasst ein System eine erfindungsgemäße Vorrichtung nach einer der vorstehend genannten Ausführungsformen, einen Netzwerkknoten des ersten Netzwerks, der mit einer der Sende-/Empfangseinrichtungen verbunden ist, und einen Netzwerkknoten des zweiten Netzwerks, der mit der jeweils anderen Sende-/Empfangseinrichtung verbunden ist.

Weiterbildungen und Variationen sind in den abhängigen Ansprüchen angegeben.

Weitere Merkmale und Vorteile der Erfindung ergeben sich aus der nachfolgenden Beschreibung von Ausführungsbeispielen anhand der Figuren.

Es zeigen:
- Fig. 1: ein Schaubild für ein Modell einer Kommunikation zwischen zwei Netzwerken;
- Fig. 2: ein Schaubild für ein weiteres Modell einer Kommunikation zwischen zwei Netzwerken;
- Fig. 3: ein Schaubild für noch ein weiteres Modell einer Kommunikation zwischen zwei Netzwerken;
- Fig. 4: ein Schaubild für ein Modell einer Kommunikation zwischen zwei Netzwerken gemäß einer Ausführungsform der Erfindung;
- Fig. 5: ein Schema für ein Verfahren zum Herstellen einer End-zu-End-Kommunikation zwischen zwei Netzwerken gemäß einer Ausführungsform der Erfindung;
- Fig. 6a: eine Illustration einer uncodierten Nachricht;
- Fig. 6b: eine Illustration einer codierten Nachricht;
- Fig. 6c: eine Illustration einer codierten Nachricht gemäß einer Ausführungsform der Erfindung; und
- Fig. 7: eine schematische Darstellung einer Vorrichtung zum Herstellen einer End-zu-End-Kommunikation zwischen zwei Netzwerken gemäß einer Ausführungsform der Erfindung.

Gleichartige und/oder gleich wirkende Elemente in den Figuren sind mit gleichen Bezugszeichen versehen. Es versteht sich, dass die angegebenen Darstellungen nicht notwendigerweise maßstabsgetreu angegeben sind. Weiterhin ist es selbstverständlich, dass einzelne Merkmale und/oder Konzepte verschiedener in den Zeichnungen dargestellter Ausführungsformen miteinander beliebig - soweit sinnvoll - kombiniert werden können.

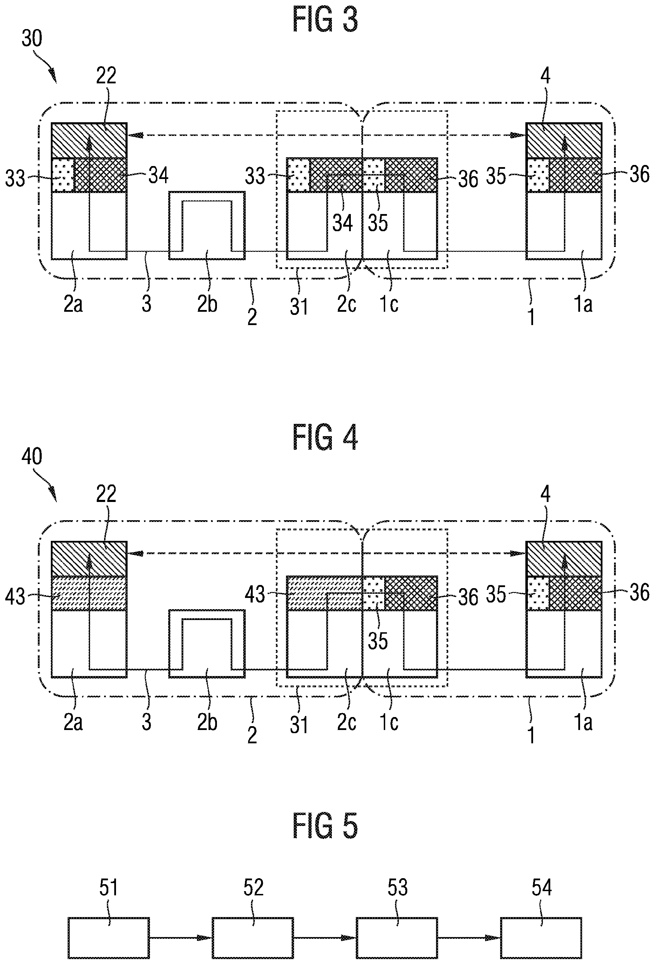

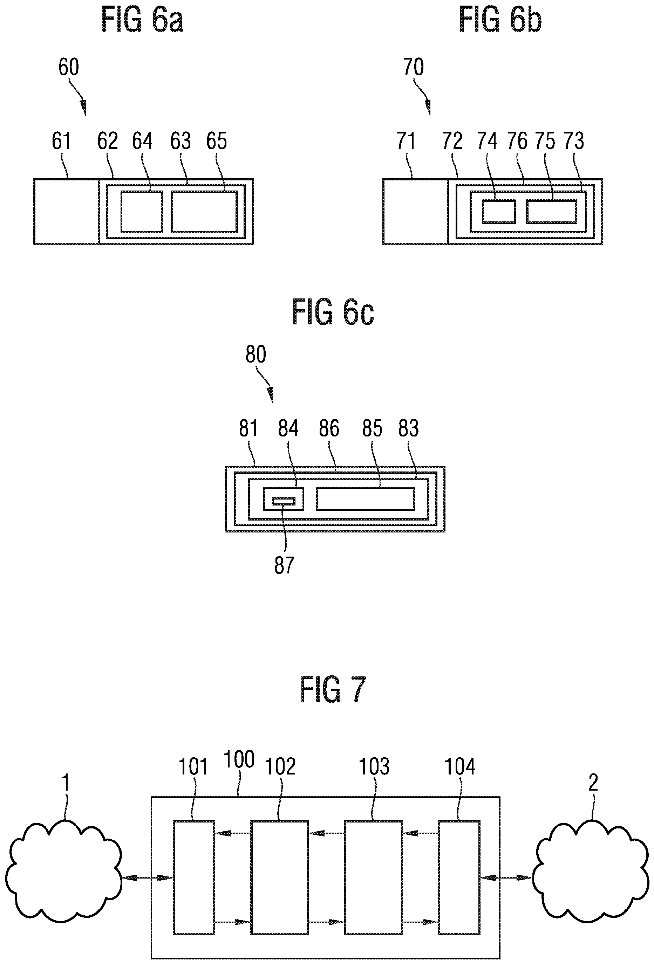

Fig. 3 zeigt ein Schaubild für noch ein weiteres Modell 30 einer Kommunikation zwischen zwei Netzwerken. Das Modell 30 unterscheidet sich von dem Modell 20 darin, dass eine Umsetzvorrichtung 31 eingesetzt wird, die Datenpakete und/oder Nachrichten von einem ersten Netzwerk 1, beispielsweise dem Internet, zur Weiterleitung in ein zweites Netzwerk 2, beispielsweise ein Sensornetzwerk, umsetzt. Wie in Fig. 6a gezeigt, bestehen derartige Nachrichten bzw. Datenpakete 60 aus einem Kopfteil (Header) 61, der Angaben des verwendeten Transportprotokolls, beispielsweise http [3,4], enthält. Ein Anwendungsdatenteil 62 des Datenpakets 60 umfasst Angaben des jeweils verwendeten Datenaustauschprotokolls. Beispielsweise kann der Anwendungsdatenteil 62 eine SOAP-Nachricht 63 [7] umfassen. SOAP-Nachrichten 63 bestehen gewöhnlich aus einem Rahmenkonstrukt, dem sogenannten "envelope" ("Umschlag"), in den ein Körperelement, der sogenannte "SOAP-body" 65, eingebettet ist. Der SOAP-body 65 umfasst dabei die der SOAP-Nachricht 63 zugrundeliegenden Nutzdaten, die von der Anwendung 4 generiert werden. Optional kann eine SOAP-Nachricht 63 auch einen eigenen Kopfteil ("SOAP-header") 64 umfassen, in dem weitere die Verarbeitung der SOAP-Nachricht 63 betreffende Informationen, wie beispielsweise Routing-Informationen, Verschlüsselungsdaten oder Authentifikationsdaten, enthalten sein können.

Gemäß dem Modell 30 wird in der Umsetzvorrichtung 31 ein Header 35 eines Datenpaketes 60, der dem Header 61 entsprechen kann, in einen codierten Header 33 umgesetzt, und ein Anwendungsdatenteil 36, der dem Anwendungsdatenteil 62 des Datenpaketes 60 entsprechen kann, in einen codierten Anwendungsdatenteil 34 umgesetzt. Der codierte Header 33 und der codierte Anwendungsdatenteil 34 werden dann zu einem codierten Datenpaket zusammengesetzt und an das zweite Netzwerk 2 übergeben, wo eine Anwendung 22 die codierten Bestandteile 33 und 34 entsprechend decodieren und auslesen kann.

Ein solches codiertes Datenpaket kann beispielsweise wie ein Datenpaket 70 in Fig. 6b aufgebaut sein. Das codierte Datenpaket 70 umfasst einen codierten Header 71, der beispielsweise durch Codierung eines Headers 61 in Fig. 6a erzeugt werden kann. Die Codierung des Headers 61 in einen codierten Header 71 kann beispielsweise mit Hilfe von Chopan ("Compressed HTTP over Personal Area Networks") [1] durchgeführt werden. Chopan stellt ein Kompressionsverfahren für HTTP in binäres Format dar. Ein codierter Anwendungsdatenteil 72 des Datenpaketes 70 kann beispielsweise aus einem Anwendungsdatenteil 62 eines Datenpaketes 60 in Fig. 6a erzeugt werden. Der codierte Anwendungsdatenteil 72 kann einen Datenteil 76, beispielsweise im EXI-Format ("Efficient XML Interchange") [2] umfassen, mit Hilfe dessen eine SOAP-Nachricht 73 mit einem SOAP-header 74 und einem SOAP-body 75 codiert werden kann. EXI ist eine Binärcodierung textbasierter XML-Dokumente (XML-Markup Language) [5] und arbeitet mit entropiebasierten Codierungsschemata. Der Datenteil 76 kann auch im binären MPEG-Format für XML (BiM) [6] codiert sein. BiM ist ein internationaler Standard zu generischen binären Codierung von XML-Daten.

Für die Umsetzung der komprimierten und codierten Datenanteile 33 und 34 in decodierte Nachrichten bzw. Datenpakete, die von der Anwendung 22 des zweiten Netzwerks 2 ausgelesen werden können, sind zwei Decodierer notwendig, die die jeweiligen Protokolle decodieren. Diese Decodierer sind im verarbeitenden Gerät des zweiten Netzwerks 2, beispielsweise einem Mikroprozessor eines Sensors in einem Sensornetzwerk implementiert.

Fig. 4 zeigt ein Schaubild für ein Modell 40 einer Kommunikation zwischen zwei Netzwerken gemäß einer Ausführungsform der Erdfindung. Das Modell 40 unterscheidet sich vom Modell 30 im Wesentlichen darin, dass ein Datenpaket bzw. eine Nachricht mit einem Header 35 und einem Anwendungsdatenteil 36, die von einem ersten Netzwerk 1, wie beispielsweise dem Internet empfangen wird, in einer Vorrichtung 31 in ein codiertes Datenpaket bzw. eine codierte Nachricht 43 umgesetzt wird. Die codierte Nachricht 43 kann dabei einer codierten Nachricht 80 wie in Fig. 6c gezeigt entsprechen.

Die codierte Nachricht 80 in Fig. 6c umfasst dabei einen codierten Anteil 81, in dem ein Header wie beispielsweise ein Header 61, beispielsweise ein HTTP-Header, in einen codierten Anwendungsdatenanteil 81 integriert ist. Der codierte Anwendungsdatenanteil 81 kann dabei einen Anteil 86 umfassen, der mit Hilfe eines binären Codierungsschemas, beispielsweise mit EXI codiert ist. Der Anteil 86 kann dabei eine modifizierten Anwendungsdatenanteil 83, beispielsweise eine SOAP-Nachricht 83 umfassen, die der SOAP-Nachricht 63 des Datenpaketes 60 in Fig. 6a entsprechen kann. Die SOAP-Nachricht 63 kann dabei einen SOAP-header 84 und einen SOAP-body 85, ähnlich dem SO-AP-header 64 bzw. dem SOAP-body 65 in Fig. 6a umfassen. Der SOAP-header 84 weist dabei einen Anteil 87 auf, der codierte Daten aus dem Header 61 umfasst. Der Anteil 87 kann hierbei mit Hilfe von Web Service Addressing (WS-Addressing) codiert worden sein. WS-Addressing ist die Spezifikation eines Mechanismus, der es Web Services erlaubt, Adressinformationen auszutauschen. Dabei wird eine Datenstruktur für die Übergabe einer Referenz zu einem Webservice-Endpunkt und eine Menge von Adresseigenschaften von Nachrichten, die Adressinformationen mit einer bestimmten Nachricht verknüpfen, geschaffen. WS-Addressing ist Teil der sogenannten WS-Spezifikationen, die als modulare Erweiterung zu SOAP entwickelt wurden. In dem Anteil 87 können Informationen codiert werden, die als Transportinformationen in dem HTTP-Teil des Headers 61 vorhanden sind.

Auf diese Weise kann die Nachricht bzw. das Datenpaket 61, welches aus einem Header 61, beispielsweise einem HTTP-Header, und einem Anwendungsdatenanteil 62, beispielsweise einer SOAP-Nachricht, besteht, einheitlich mittels eines einzigen ersten Codierungsschemas codiert werden. Dieses Codierungsschema kann beispielsweise EXI oder BiM sein. Dazu wird der Header 61 zunächst über ein zweites Codierungsschema, beispielsweise WS-Addressing, in den Anwendungsdatenanteil 62, beispielsweise einen SOAP-header 64 überführt, so dass der Anwendungsdatenteil 62 danach einheitlich in eine codierte Nachricht 80 codiert werden kann.

Dies hat den Vorteil, dass in einem Netzwerkknoten 2a, in dem ein Mikroprozessor die codierte Nachricht 43 für eine Anwendung 22, beispielsweise einen Sensor in einem Sensornetzwerk, decodiert, nur noch einen einzigen Decodierer benötigt, beispielsweise einen EXI-Decodierer oder einen BiM-Decodierer. Dadurch wird weniger Rechenkapazität bzw. Speicherplatz in dem Mikroprozessor benötigt, der dann mehr Rechenleistung und Speicherplatz für andere Operationen zur Verfügung hat.

Ein weiterer Vorteil der Verwendung von EXI ist hohe Kompressionsrate und die damit verbundene Bandbreiteneinsparung bei der Übertragung der codierten Nachricht im zweiten Netzwerk 2, da EXI nicht an Bytegrößen gebunden ist.

Trotz einer Kompression mit EXI bleibt die Kompatibilität mit HTTP erhalten, so dass das erfindungsgemäße Verfahren sehr gut für die Implementierung neuer Produkte geeignet ist, die dennoch mit älteren Produkten kompatibel bleiben.

Fig. 5 zeigt ein Schema für ein Verfahren zum Herstellen einer End-zu-End-Kommunikation zwischen zwei Netzwerken gemäß einer Ausführungsform der Erfindung. In einem ersten Schritt 51 wird eine Nachricht aus einem ersten Netzwerk empfangen, wobei die Nachricht einen ersten Header und einen Anwendungsdatenteil aufweist. Das erste Netzwerk kann dabei das Internet sein, und die Nachricht kann in dem Header HTTP-Daten und in dem Anwendungsdatenteil eine SOAP-Nachricht umfassen.

In einem zweiten Schritt 52 werden Daten des ersten Headers in einen zweiten Header innerhalb des Anwendungsdatenteils mit Hilfe eines ersten Codierungsschemas zur Erzeugung eines modifizierten Anwendungsdatenteils codiert. Dabei kann der zweite Header ein SOAP-header einer SOAP-Nachricht sein, in dem mit Hilfe von WS-Addressing (WS-Web Service, siehe www.w3c.org) ein Datenanteil erzeugt wird, der HTTP-Daten eines HTTP-Headers umfasst.

In einem dritten Schritt 53 wird der modifizierte Anwendungsdatenteil mit Hilfe eines zweiten Codierungsschemas zur Erzeugung einer codierten Nachricht codiert. Es ist dabei möglich, dass das zweite Codierungsschema ein binäres Codierungsschema ist, insbesondere EXI (Efficient XML Interchange) oder BiM (binäres MPEG-Format für XML), mit Hilfe dessen eine SOAP-Nachricht codiert wird.

In einem vierten Schritt 54 wird die codierte Nachricht an ein zweites Netzwerk gesendet. Das zweite Netzwerk kann dabei insbesondere ein Sensornetzwerk sein, beispielsweise ein industrielles Sensornetzwerk, ein Sensornetzwerk in der Gebäudetechnik oder ähnliches.

Gemäß einer weiteren Ausführungsform ist ein Verfahren zum Herstellen einer End-zu-End-Kommunikation zwischen zwei Netzwerken vorgesehen, dass im Prinzip die Umkehrung des vorstehend im Bezug auf Fig. 5 dargestellten erfindungsgemäßen Verfahrens repräsentiert. Dabei kann eine codierte Nachricht aus einem Netzwerk, beispielsweise einem Sensornetzwerk, empfangen werden, die codierte Nachricht in einen Anwendungsdatenteil mit einem ersten Header und Anwendungsdaten mit Hilfe eines ersten Codierungsschemas, beispielsweise EXI, decodiert werden, die Daten des ersten Headers in einen zweiten Header mit Hilfe eines zweiten Codierungsschemas, beispielsweise WS-Addressing, decodiert werden, der zweite Headers vor den Anwendungsdatenteil zur Erzeugung einer decodierten Nachricht, beispielsweise mit einem HTTP-Header und einer SOAP-Nachricht, angefügt werden, und die decodierte Nachricht an ein zweites Netzwerk, beispielsweise das Internet, gesendet werden.

Fig. 7 zeigt eine schematische Darstellung einer Vorrichtung 100 zum Herstellen einer End-zu-End-Kommunikation zwischen zwei Netzwerken gemäß einer Ausführungsform der Erfindung. Die Vorrichtung 100 umfasst dabei eine erste Sende-/Empfangseinrichtung 101, die dazu ausgelegt ist, eine Nachricht aus einem ersten Netzwerk 1 zu empfangen, wobei die Nachricht einen ersten Header und einen Anwendungsdatenteil aufweist, eine erste Codiereinrichtung 102, die dazu ausgelegt ist, Daten des ersten Headers in einen zweiten Header innerhalb des Anwendungsdatenteils mit Hilfe eines ersten Codierungsschemas in einen modifizierten Anwendungsdatenteil zu codieren, eine zweite Codiereinrichtung 103, die dazu ausgelegt ist, den modifizierten Anwendungsdatenteil mit Hilfe eines zweiten Codierungsschemas in eine codierte Nachricht zu codieren, und eine zweite Sende-/Empfangseinrichtung 104, die dazu ausgelegt ist, die codierte Nachricht an ein zweites Netzwerk 2 zu senden. Dabei kann die Vorrichtung 100 insbesondere ein Verfahren nach Fig. 5 durchführen. Für einen Fachmann ist es klar, dass die erste Codiereinrichtung 102 und die zweite Codiereinrichtung 103 auch als eine einzelne Codiereinrichtung mit den Funktionalitäten der Codiereinrichtungen 102 und 103 ausgestaltet sein kann.

Gemäß einer weiteren Ausführungsform ist eine Vorrichtung zum Herstellen einer End-zu-End-Kommunikation zwischen zwei Netzwerken vorgesehen, die eine zweite Sende-/Empfangseinrichtung, die dazu ausgelegt ist, eine codierte Nachricht aus einem zweiten Netzwerk zu empfangen, eine zweite Decodiereinrichtung, die dazu ausgelegt ist, Daten der codierten Nachricht in einen Anwendungsdatenteil mit einem zweiten Header und Anwendungsdaten mit Hilfe eines zweiten Codierungsschemas zu decodieren, eine erste Decodiereinrichtung, die dazu ausgelegt ist, Daten des zweiten Headers in einen ersten Header mit Hilfe eines ersten Codierungsschemas zu decodieren, und den ersten Header vor den Anwendungsdatenteil zur Erzeugung einer decodierten Nachricht anzufügen, und eine erste Sende-/Empfangseinrichtung, die dazu ausgelegt ist, die decodierte Nachricht an ein erstes Netzwerk zu senden, umfasst. Die Vorrichtung kann dabei ähnlich der Vorrichtung 100 in Fig. 7 aufgebaut sein. Insbesondere können die Einrichtungen 101, 102, 103 und 104 dazu ausgelegt sein, Nachrichten bzw. Datenpakete in beiden Richtungen, also von dem ersten in das zweite Netzwerk und umgekehrt weiterzuleiten, und dabei die entsprechenden Codierungs- bzw. Decodierungsschritte durchzuführen. Für einen Fachmann ist es klar, dass die erste Decodiereinrichtung und die zweite Decodiereinrichtung auch als eine einzelne Decodiereinrichtung mit den Funktionalitäten der ersten und zweiten Decodiereinrichtung ausgestaltet sein kann.

### Literaturverzeichnis

[1] Chopan http://tools.ietf.org/pdf/draft-frank-6lowpan-chopan-00.pdf
[2] W3C, EXI "Efficient XML Interchange", http://www.w3.org/tr/2009/cr-exi-20091208/
[3] IETF, Hypertext Transfer Protocol, Version HTTP/1.0, sie-he RFC 1945, http://tools.ietf.org/html/rfc1945
[4] IETF, Hypertext Transfer Protocol, Version HTTP/1.1, sie-he RFC 2616, http://tools.ietf.org/html/rfc2616
[5] W3C, Extensible Markup Language (XML) 1.0 (Fifth Edition), siehe http://www.w3.org/TR/2008/REC-xml-20081126/
[6] Information Technology - MPEG Systems Technologies - Part 1: Binary MPEG format for XML, ISO/IEC FDIS 23001 - 1:2005 (E), ISO/IEC JTC 1/SC 29/WG11, w7597, 4. November 2005
[7] Simple Object Access Protocol (SOAP), siehe http://www.w3.org/TR/soap/

## Patentansprüche

1. Verfahren zum Herstellen einer End-zu-End-Kommunikation zwischen zwei Netzwerken, umfassend:
Empfangen einer Nachricht (60) aus einem ersten Netzwerk (1), wobei die Nachricht (60) einen ersten Header (35; 61) und einen Anwendungsdatenteil (36; 62) aufweist; und Codieren von Daten des ersten Headers (35; 61) in einen zweiten Header (64) innerhalb des Anwendungsdatenteils (36; 62) mit Hilfe eines ersten Codierungsschemas zur Erzeugung eines modifizierten Anwendungsdatenteils (83), **gekennzeichnet durch** die Schritte:
Codieren des modifizierten Anwendungsdatenteils (83) mit Hilfe eines zweiten Codierungsschemas zur Erzeugung einer codierten Nachricht (43; 80); und
Senden der codierten Nachricht (43; 80) an ein zweites Netzwerk (2).

2. Verfahren zum Herstellen einer End-zu-End-Kommunikation zwischen zwei Netzwerken, umfassend:
Empfangen einer codierten Nachricht (80) aus einem zweiten Netzwerk (2),
**gekennzeichnet durch** die Schritte:
Decodieren der codierten Nachricht (80) in einen Anwendungsdatenteil (62) mit einem zweiten Header (64) und Anwendungsdaten (65) mit Hilfe eines zweiten Codierungsschemas;
Decodieren von Daten des zweiten Headers (64) in einen ersten Header (61) mit Hilfe eines ersten Codierungsschemas;
Anfügen des zweiten Headers (61) vor den Anwendungsdatenteil (62) zur Erzeugung einer decodierten Nachricht (60); und
Senden der decodierten Nachricht (60) an ein erstes Netzwerk (1).

3. Verfahren nach einem der Ansprüche 1 und 2, wobei der Anwendungsdatenteil (36; 62) XML-Daten umfasst.

4. Verfahren nach Anspruch 3, wobei der Anwendungsdatenteil (36; 62) eine SOAP-Nachricht umfasst.

5. Verfahren nach Anspruch 4, wobei der zweite Header (64) ein SOAP-Header ist.

6. Verfahren nach einem der vorangegangenen Ansprüche, wobei der erste Header (61) HTTP-Daten umfasst.

7. Verfahren nach einem der vorangegangenen Ansprüche, wobei das erste Codierungsschema Web Services Addressing umfasst.

8. Verfahren nach einem der vorangegangenen Ansprüche, wobei das zweite Codierungsschema Efficient XML Interchange oder Binäres MPEG-Format für XML ist.

9. Verfahren nach einem der vorangegangenen Ansprüche, wobei das erste Netzwerk (1) das Internet ist.

10. Verfahren nach einem der vorangegangenen Ansprüche, wobei das zweite Netzwerk (2) ein Sensornetzwerk ist.

11. Vorrichtung (100) zum Herstellen einer End-zu-End-Kommunikation zwischen zwei Netzwerken, umfassend:
eine erste Sende-/Empfangseinrichtung (101), die dazu ausgelegt ist, eine Nachricht (60) aus einem ersten Netzwerk (1) zu empfangen, wobei die Nachricht (60) einen ersten Header (61) und einen Anwendungsdatenteil (62) aufweist;
eine erste Codiereinrichtung (102), die dazu ausgelegt ist, Daten des ersten Headers (61) in einen zweiten Header (64) innerhalb des Anwendungsdatenteils (62) mit Hilfe eines ersten Codierungsschemas in einen modifizierten Anwendungsdatenteil (83) zu codieren; und
eine zweite Sende-/Empfangseinrichtung (104), die dazu ausgelegt ist, eine codierte Nachricht (80) an ein zweites Netzwerk (2) zu senden,
**gekennzeichnet durch**
eine zweite Codiereinrichtung (103), die dazu ausgelegt ist, den modifizierten Anwendungsdatenteil (83) mit Hilfe eines zweiten Codierungsschemas in die codierte Nachricht (80) zu codieren.

12. Vorrichtung (100) zum Herstellen einer End-zu-End-Kommunikation zwischen zwei Netzwerken, umfassend:
eine zweite Sende-/Empfangseinrichtung (104), die dazu ausgelegt ist, eine codierte Nachricht (80) aus einem zweiten Netzwerk (2) zu empfangen;
eine erste Decodiereinrichtung (102), die dazu ausgelegt ist, Daten eines zweiten Headers (64) in einen ersten Header (61) mit Hilfe eines ersten Codierungsschemas zu decodieren, und den ersten Header (61) vor den Anwendungsdatenteil (62) zur Erzeugung einer decodierten Nachricht (60) anzufügen; und
eine erste Sende-/Empfangseinrichtung (101), die dazu ausgelegt ist, die decodierte Nachricht (60) an ein erstes Netzwerk (1) zu senden,
**gekennzeichnet durch**
eine zweite Decodiereinrichtung (103), die dazu ausgelegt ist, Daten der codierten Nachricht (80) in einen Anwendungsdatenteil (62) mit einem zweiten Header (64) und Anwendungsdaten (65) mit Hilfe eines zweiten Codierungsschemas zu decodieren.

13. System, umfassend:
eine Vorrichtung (100) nach Anspruch 11 oder 12;
einen Netzwerkknoten des ersten Netzwerks (1), der mit einer der Sende-/Empfangseinrichtungen (101; 104) verbunden ist; und
einen Netzwerkknoten des zweiten Netzwerks (2), der mit der jeweils anderen Sende-/Empfangseinrichtung (104; 101) verbunden ist.

## Claims

1. Method for setting up end-to-end communication between two networks, comprising:
reception of a message (60) from a first network (1), wherein the message (60) has a first header (35; 61) and an application data portion (36; 62); and
coding of data from the first header (35; 61) into a second header (64) within the application data portion (36; 62) using a first coding scheme in order to produce a modified application data portion (83),
**characterized by** the steps of:
coding of the modified application data portion (83) using a second coding scheme in order to produce a coded message (43; 80); and
sending of the coded message (43; 80) to a second network (2).

2. Method for setting up end-to-end communication between two networks, comprising:
reception of a coded message (80) from a second network (2),
**characterized by** the steps of:
decoding of the coded message (80) into an application data portion (62) having a second header (64) and application data (65) using a second coding scheme;
decoding of data from the second header (64) into a first header (61) using a first coding scheme;
annexing of the second header (61) in front of the application data portion (62) in order to produce a decoded message (60); and
sending of the decoded message (60) to a first network (1).

3. Method according to either of Claims 1 and 2, wherein the application data portion (36; 62) comprises XML data.

4. Method according to Claim 3, wherein the application data portion (36; 62) comprises a SOAP message.

5. Method according to Claim 4, wherein the second header (64) is a SOAP header.

6. Method according to one of the preceding claims, wherein the first header (61) comprises HTTP data.

7. Method according to one of the preceding claims, wherein the first coding scheme comprises web services addressing.

8. Method according to one of the preceding claims, wherein the second coding scheme is Efficient XML Interchange or binary MPEG format for XML.

9. Method according to one of the preceding claims, wherein the first network (1) is the Internet.

10. Method according to one of the preceding claims, wherein the second network (2) is a sensor network.

11. Apparatus (100) for setting up end-to-end communication between two networks, comprising:
a first transmission/reception device (101), which is designed to receive a message (60) from a first network (1), wherein the message (60) has a first header (61) and an application data portion (62);
a first coding device (102), which is designed to code data from the first header (61) into a second header (64) within the application data portion (62) using a first coding scheme to produce a modified application data portion (83); and
a second transmission/reception device (104), which is designed to send a coded message (80) to a second network (2),
**characterized by**
a second coding device (103), which is designed to code the modified application data portion (83) using a second coding scheme into the coded message (80).

12. Apparatus (100) for setting up end-to-end communication between two networks, comprising:
a second transmission/reception device (104), which is designed to receive a coded message (80) from a second network (2) ;
a first decoding device (102), which is designed to decode data from a second header (64) into a first header (61) using a first coding scheme and to annex the first header (61) in front of the application data portion (62) in order to produce a decoded message (60); and
a first transmission/reception device (101), which is designed to send the decoded message (60) to a first network (1),
**characterized by**
a second decoding device (103), which is designed to decode data from the coded message (80) into an application data portion (62) having a second header (64) and application data (65) using a second coding scheme.

13. System comprising:
an apparatus (100) according to Claim 11 or 12;
a network node in the first network (1), which network node is connected to one of the transmission/reception devices (101; 104); and
a network node in the second network (2), which network node is connected to the other transmission/reception device (104; 101).

## Revendications

1. Procédé de réalisation d'une communication de bout à bout entre deux réseaux, comprenant:
la réception d'un message (60) issu d'un premier réseau (1), le message (60) présentant un premier en-tête (35 ; 61) et une partie de données d'application (36 ; 62) et le codage de données du premier en-tête (35 ; 61) en un deuxième en-tête (64) dans la partie de données d'applications (36 ; 62) à l'aide d'un premier schéma de codage pour générer une partie de données d'applications modifiée (83),
**caractérisé par** les étapes suivantes :
codage de la partie de données d'applications modifiée (83) à l'aide d'un deuxième schéma de codage pour générer un message codé (43 ; 80) et
envoi du message codé (43 ; 80) à un deuxième réseau (2).

2. Procédé de réalisation d'une communication de bout à bout entre deux réseaux, comprenant :
la réception d'un message codé (80) issu d'un deuxième réseau (2),
**caractérisé par** les étapes suivantes :
décodage du message codé (80) en une partie de données d'application (62) avec un deuxième en-tête (64) et des données d'application (65) à l'aide d'un deuxième schéma de codage ;
décodage de données du deuxième en-tête (64) en un premier en-tête (61) à l'aide d'un premier schéma de codage ;
insertion du deuxième en-tête (61) avant la partie de données d'application (62) pour générer un message décodé (60) et
envoi du message décodé (60) à un premier réseau (1).

3. Procédé selon l'une des revendications 1 et 2, la partie de données d'application (36 ; 62) comprenant des données XML.

4. Procédé selon la revendication 3, la partie de données d'application (36 ; 62) comprenant un message SOAP.

5. Procédé selon la revendication 4, le deuxième en-tête (64) étant un en-tête SOAP.

6. Procédé selon l'une des revendications précédentes, le premier en-tête (61) comprenant des données HTTP.

7. Procédé selon l'une des revendications précédentes, le premier schéma de codage comprenant l'adressage de services Web.

8. Procédé selon l'une des revendications précédentes, le deuxième schéma de codage étant l'Efficient XML Interchange ou le format binaire MPEG pour XML.

9. Procédé selon l'une des revendications précédentes, le premier réseau (1) étant l'internet.

10. Procédé selon l'une des revendications précédentes, le deuxième réseau (2) étant un réseau de capteurs.

11. Dispositif (100) pour réaliser une communication de bout à bout entre deux réseaux, comprenant :
un premier dispositif émetteur / récepteur (101) qui est conçu pour recevoir un message (60) issu d'un premier réseau (1), le message (60) comprenant un premier en-tête (61) et une partie de données d'application (62) ;
un premier dispositif de codage (102) qui est conçu pour coder des données du premier en-tête (61) en un deuxième en-tête (64) dans la partie de données d'applications (62) à l'aide d'un premier schéma de codage en une partie de données d'application modifiée (83) et
un deuxième dispositif émetteur / récepteur (104) qui est conçu pour envoyer un message codé (80) à un deuxième réseau (2),
**caractérisé par** un deuxième dispositif de codage (103) qui est conçu pour coder la partie de données d'application modifiée (83) en le message codé (80) à l'aide d'un deuxième schéma de codage.

12. Dispositif (100) pour réaliser une communication de bout à bout entre deux réseaux, comprenant :
un deuxième dispositif émetteur / récepteur (104) qui est conçu pour recevoir un message codé (80) d'un deuxième réseau (2) ;
un premier dispositif de décodage (102) qui est conçu pour décoder des données d'un deuxième en-tête (64) en un premier en-tête (61) à l'aide d'un premier schéma de codage et pour insérer le premier en-tête (61) avant la partie de données d'application (62) pour générer un message décodé (60) et
un premier dispositif émetteur / récepteur (101) qui est conçu pour envoyer le message décodé (60) à un premier réseau (1),
**caractérisé par**
un deuxième dispositif de décodage (103) qui est conçu pour décoder des données du message codé (80) en une partie de données d'application (62) avec un deuxième en-tête (64) et des données d'application (65) à l'aide d'un deuxième schéma de codage.

13. Système comprenant :
un dispositif (100) selon la revendication 11 ou 12 ;
un noeud de réseau du premier réseau (1), lequel est relié à l'un des dispositifs émetteurs / récepteurs (101 ; 104) et
un noeud de réseau du deuxième réseau (2), lequel est relié à l'autre dispositif émetteur / récepteur respectif (104 ; 101).
